# EUROPEAN PATENT APPLICATION

(11) **EP 1 863 011 A2**
(43) Date of publication of application: **05.12.2007**
(21) Application number: 07010800.6
(22) Date of filing: 31.05.2007
(51) Int. Cl.: G09G 3/36

(54) **Display device and driving method thereof**

(30) Priority: 31.05.2006 JP 2006151462
(71) Applicant: Hitachi Displays, Ltd., Mobara-shi Chiba 297-8622 (JP)
(72) Inventor: Oke, Ryutaro, Chiba-ken 297-8622 (JP); Mori, Ikuko, Chiba-ken 297-8622 (JP)
(74) Representative: Beetz & Partner

(57) **Abstract**

The invention relates to a TFT display device and a driving method thereof. The display device having a display panel includes a plurality of scan signal lines (GL), a plurality of video signal lines (DL) three-dimensionally intersecting the plurality of scan signal lines (GL) with an insulating layer (PAS1) therebetween, and thin film transistor elements and pixel electrodes (PX) disposed in pixel regions enclosed by each adjacent two of the scan signal lines (GL) and each adjacent two of the video signal lines (DL). The direction of disposition of the thin film transistor elements toward the video signal lines (DL) is inverted each time the video signal lines cut across the scan signal lines in the direction of extension of the video signal lines. Each of the video signal lines is given a signal whose polarity is identical in one frame period and is inverted for each frame period. Each adjacent two of the video signal lines (DL) are given signals having mutually inverse polarities. The display area (DA) is set up as a group of the pixel regions in the display panel.

## Description

### BACKGROUND OF THE INVENTION

### (1) Field of the Invention

The present invention relates to a display device, particularly, to an effective technology applicable to a display device including a display panel in which a thin film transistor (TFT) element is disposed for each pixel, and a method of driving such display devices.

### (2) Description of the Related Art

Among display devices for use in television sets or the like has been a liquid crystal display device wherein a liquid crystal display panel is used.

The above-mentioned display panel is a display panel in which a liquid crystal material is sealed in between a pair of substrates. One of these substrates has thereon a TFT element and a pixel electrode disposed for each pixel. The other substrate has thereon a color filter disposed in a position opposed to each pixel electrode.

The substrate (hereafter referred to as "TFT substrate"), which has the TFT elements and the like disposed thereon, also has thereon a plurality of scan signal lines and a plurality of video signal lines three-dimensionally intersecting the plurality of scan signal lines with an insulating layer therebetween. The region enclosed by two such scan signal lines and two such video signal lines corresponds to one pixel region. A TFT element and a pixel electrode are disposed in each pixel region.

The gate electrode of a TFT element disposed in each pixel region on the TFT substrate is coupled to a scan signal line, and the drain electrode thereof is coupled to a video signal line. The drain electrodes of the TFT elements disposed in a plurality of pixel regions arranged in the direction of extension of the video signal lines are generally coupled to an identical video signal line.

On the other hand, an example in which the drain electrodes disposed in a plurality of pixel regions arranged in the direction of extension of the video signal lines are alternately coupled to adjacent two video signal lines is described in the published Japanese Patent Application No. H10-90712.

Further, there has been proposed an example in which a drive method called "line-by-line inversion" is applied for driving a liquid crystal panel in which the drain electrodes of the TFT elements disposed in a plurality of pixel regions arranged in the direction of extension of the video signal lines are alternately coupled to adjacent two video signal lines. The line-by-line inversion driving is a drive method in which each of the video signal lines receives video signals having an identical polarity in one frame period and two adjacent video signal lines receive video signals having mutually inverse polarities. According to this drive method, pixels having a positive polarity and pixels having a negative polarity are arranged alternately in the direction of extension of the video signal lines. Also in the direction of extension of the scan signal lines, pixels having a positive polarity and pixels having a negative polarity are arranged alternately. In other words, changing the polarity for each video signal line allows pixel-by-pixel inversion (dot inversion) to be achieved.

However, when a liquid crystal display panel in which the drain electrodes of the TFT elements disposed in a plurality of pixel regions arranged in the direction of extension of the video signal lines are alternately coupled to adjacent two video signal lines is driven using the line-by-line inversion method, there is, for example, a problem that a stripe (transverse stripe) having light parts and dark parts appears on each of lines of pixels arranged in the direction of extension of the scan signal lines.

Such transverse stripes are remarkable in the proximity of the region where the scan is completed, for example, in lower regions of the screen when the screen is scanned from top to bottom.

It is the problem underlying the present invention to provide a TFT display device and a driving method therefore whereby the occurrence of transverse stripes can be suppressed or reduced.

The above problem is solved according to the independent claims. The dependent claims relate to preferred embodiments of the concept of the present invention.

### SUMMARY OF THE INVENTION

An advantage of the present invention is to provide a technology that reduces transverse stripes that appear in liquid crystal display devices.

The above-mentioned advantage, other advantages, and novel features of the present invention will be apparent from the following description and accompanying drawings.

Typical ones of aspects of the invention disclosed in this application will briefly be described below.
(1) A display device having a display panel according to an aspect of the invention includes a plurality of scan signal lines, a plurality of video signal lines three-dimensionally intersecting the plurality of scan signal lines with an insulating layer therebetween, and thin film transistor elements and pixel electrodes disposed in pixel regions enclosed by each adjacent two of the scan signal lines and each adjacent two of the video signal lines. A direction of disposition of the thin film transistor elements toward the video signal lines is inverted each time the video signal lines cut across the scan signal lines in a direction of extension of the video signal lines. Each of the video signal lines is given a signal whose polarity is identical in one frame period and is inverted for each frame period. Each adjacent two of the video signal lines are given signals having mutually inverse polarities. A display area is set up as a group of the pixel regions in the display panel.
(2) In the display device according to another aspect of the invention, each of the scan signal lines is given a scan signal twice in a period in which the video signal lines are given video signals for one frame. The potential of the pixel electrode in each pixel region is inverted relative to a common potential each time a scan signal is given to each scan signal line twice.
(3) In the display device according to a further aspect of the invention, the video signal lines are given video signals each having a higher gray level than the video signals in a first field period obtained by dividing one frame period into two field periods and are given video signals each having a lower gray level than the video signals in a second field period obtained by dividing the one frame period into two field periods. The scan signal lines are given scan signals in synchronization with the first and second field periods.
(4) In the display device according to still a further aspect of the invention, a video signal given to each of the video signal lines in one frame period is such that the polarity of the potential of each two pixels arranged in a direction of extension of the video signals is inverted relative to a common potential.

In the display device according to the aspect of the invention, the direction of disposition of the TFT elements toward the video signal lines is inverted each time the video signal lines cut across the scan signal lines in the direction of extension of the video signal lines. Specifically, the drain electrodes of the TFT elements disposed in the plurality of pixel regions arranged along the direction of extension of the video signal lines are coupled to adjacent two video signal lines alternately. When each of the video signal lines is given a signal having an identical polarity in one frame period. Each adjacent two of the video signal lines are given signals having mutually inverse polarities. Therefore, inversion drive similar to dot inversion drive can be realized.

Also, if each of the scan signal lines is given a scan signal twice in a period in which the video signal lines are given video signals for one frame and if the potential of the pixel electrode in each pixel region is inverted relative to a common potential each time a scan signal is given to each scan signal line twice, the effective period will double, thereby reducing transverse stripes that appear on each of the pixel lines along the direction of extension of the scan signal lines in the display area.

Further, if the video signal lines are given video signals each having a higher gray level than the video signals in a first field period obtained by dividing one frame period into two field periods and are given video signals each having a lower gray level than the video signals in a second field period obtained by dividing the one frame period into two field periods and if the scan signal lines are given scan signals in synchronization with the first and second field periods, transverse stripes that appear an each of the pixel lines along the direction of extension of the scan signal lines in the display area can be reduced.

Furthermore, if a video signal given to each of the video signal lines in one frame period is such that the polarity of the potential of each two pixels arranged in a direction of extension of the video signals is inverted relative to a common potential, transverse stripes that appear on each of the pixel lines along the direction of extension of the scan signal lines in the display area can be reduced.

### BRIEF DESCRIPTION OF THE DRAWINGS

Embodiments of the present invention will be described in detail with reference to the accompanying drawings, wherein:
Fig. 1 is a schematic plan view of a liquid crystal display panel seen from an observer;
Fig. 2 is a schematic sectional view taken along line A-A' of Fig. 1;
Fig. 3 is a schematic plan view showing a structure example of one pixel of a display area of a TFT substrate in the liquid crystal display panel;
Fig. 4 is a schematic sectional view taken along line B-B' of Fig. 3;
Fig. 5 is a schematic sectional view taken along line C-C' of Fig. 3;
Fig. 6 is a schematic circuit diagram showing a disposition structure of pixels of a display area of a liquid crystal display panel to which the present invention is to be applied;
Fig. 7 is a schematic drawing showing a problem with related art liquid crystal display devices;
Fig. 8 is a schematic diagram showing a cause of occurrence of transverse stripes in related display devices;
Fig. 9 is a schematic diagram showing a cause of appearance of transverse stripes in related display devices;
Figs. 10A to 10C are schematic diagrams showing a rough structure of a liquid crystal display device according to a first embodiment of the present invention;
Fig. 11 is a schematic diagram showing a method for driving a liquid crystal display device according to a second embodiment of the present invention;
Fig. 12 is a schematic diagram showing a principle of a drive method according to a third embodiment of the present invention;
Fig. 13 is a schematic diagram showing variations in pixel potential when the drive method according to the third embodiment is conducted; and
Fig. 14 is a schematic diagram showing a method for driving a liquid crystal display device according to a fourth embodiment of the present invention.

### DETAILED DESCRIPTION OF THE PREFERRED EMBODIMENTS

Embodiments of the present invention will be described below in detail with reference to the accompanying drawings.

Elements having same functions are given same reference numerals in all the drawings to describe these embodiments and no repeated description will be made.

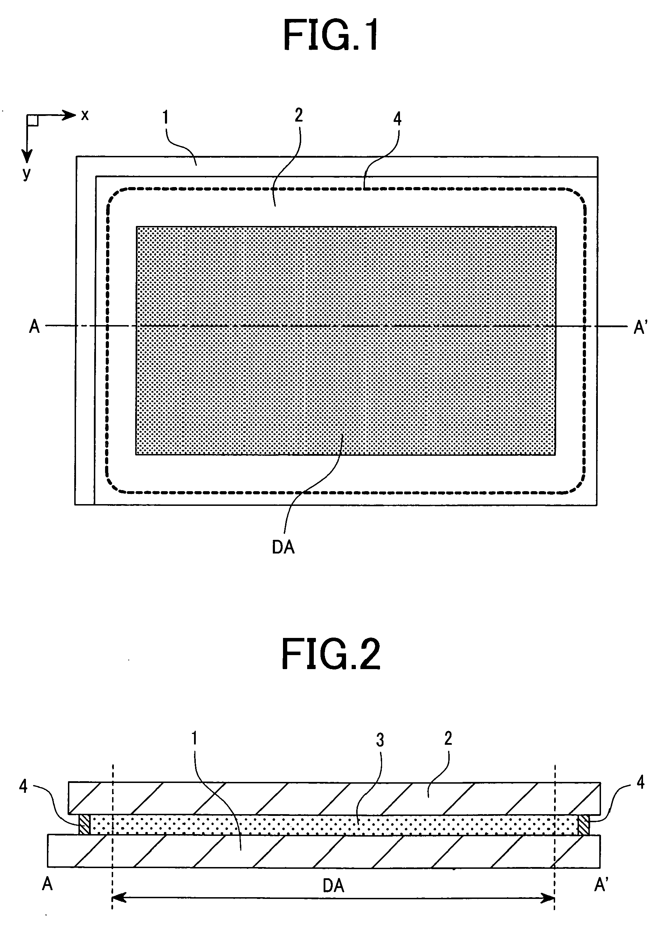

Figs. 1 to 5 are schematic views showing one structure example of a liquid crystal display panel to which the present invention is to be applied.

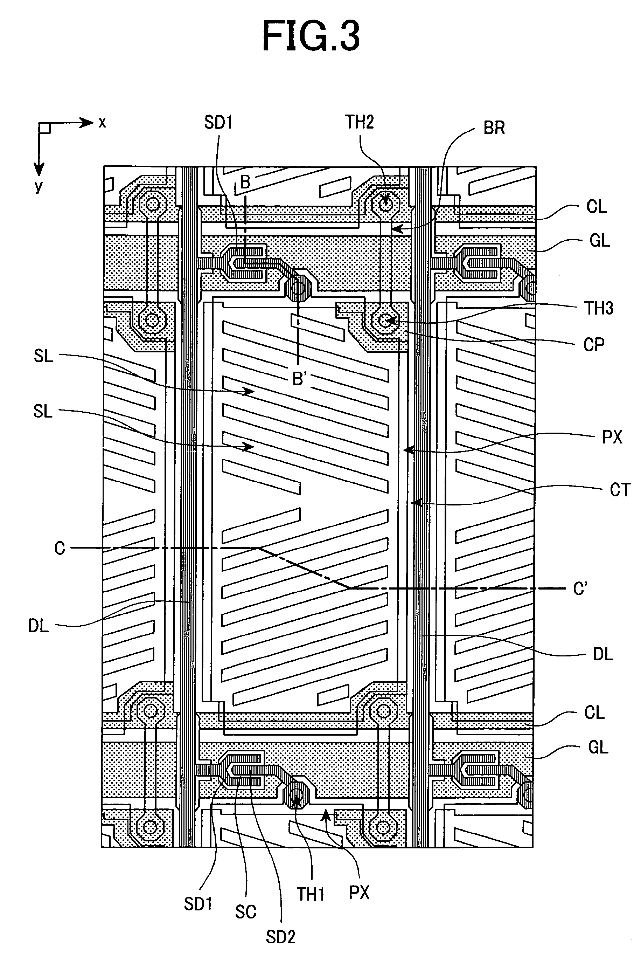

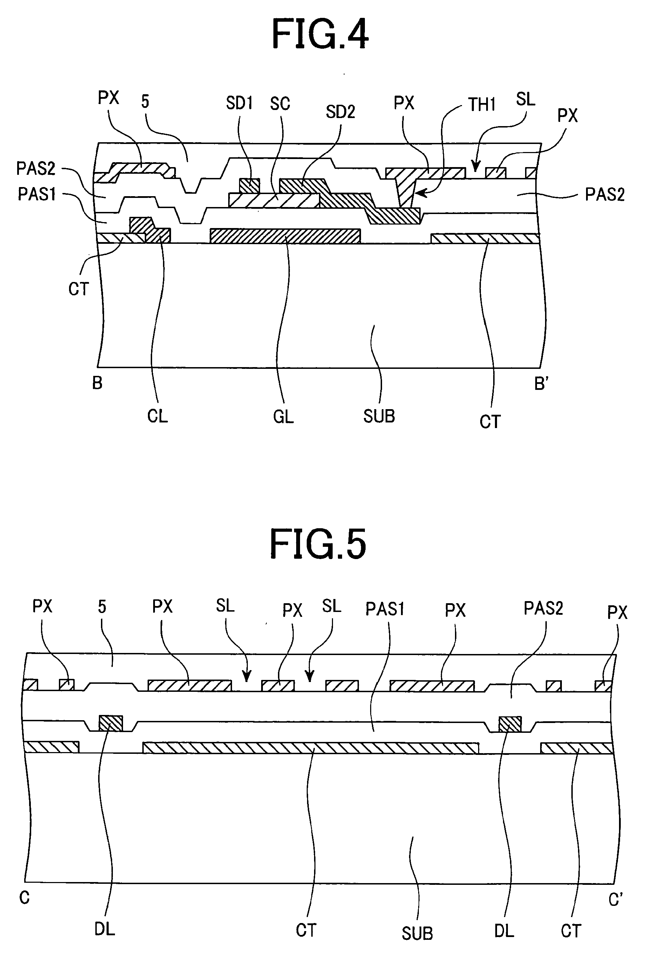

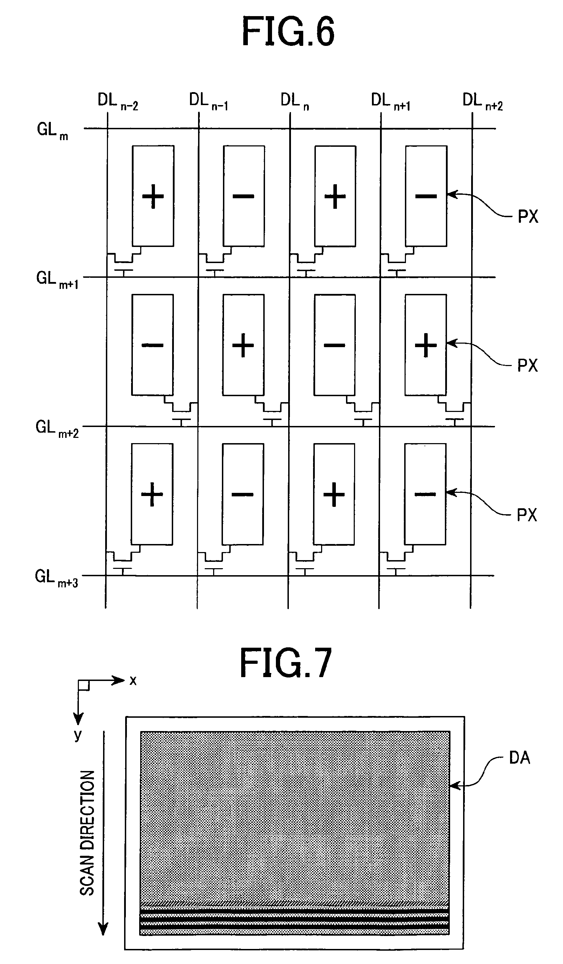

Fig. 1 is a schematic plan view of the liquid crystal display panel seen from an observer. Fig. 2 is a schematic sectional view taken along line A-A' of Fig. 1. Fig. 3 is a schematic plan view showing a structure example of one pixel of the display area of a TFT substrate in the liquid crystal display panel. Fig. 4 is a schematic sectional view taken along line B-B' of Fig. 3. Fig. 5 is a schematic sectional view taken along line C-C' of Fig. 3.

The present invention relates a display device including a display panel in which TFT elements are disposed in pixel regions included in a display area. Among such display panels are liquid crystal display panels.

One of such liquid crystal display panels is a display panel in which a liquid crystal material 3 is sealed in between a pair of substrates 1, 2 as shown in Figs. 1, 2. Here, the substrates 1, 2 are bonded together using a sealing material 4 disposed in an annular shape outside a display area DA. The liquid material 3 is sealed in a gap among the pair of substrates 1, 2 and sealing material 4.

Of the pair of substrates 1, 2, the substrate 1 that is larger in size when seen from an observer is generally called a "TFT substrate". Although not shown in Figs. 1, 2, the TFT substrate 1 has, on a surface of a transparent substrate such as a glass substrate, a plurality of scan signal lines and a plurality of video signal lines three-dimensionally intersecting the plurality of scan signal lines with an insulating layer therebetween. A region enclosed by two such scan signal lines and two such video signal lines corresponds to one pixel region. A TFT element, a pixel electrode, and the like are disposed in each pixel region. The other substrate, substrate 2, forming the pair with the TFT substrate 1 is called a "counter substrate".
If the liquid crystal display panel adopts a drive mode called "vertical electric field mode" such as twisted nematic (TN) mode or vertical alignment (VA) mode, a counter electrode (also called "common electrode") opposite to a pixel electrode an the TFT substrate 1 is provided adjacent to the counter substrate 2. If the liquid crystal display panel adopts a drive mode called "horizontal electric field mode" such as in-plane switching (IPS) mode, the counter electrode is provided adjacent to the TFT substrate 1.

Now a structure example of one pixel in the display area DA of the liquid crystal display panel will briefly be described with reference to Figs. 3 to 5.

In a liquid crystal display panel to which the present invention is to be applied, one pixel in the display area DA may basically have any structure. As a liquid crystal display panel that the present invention is desirably applied, a liquid crystal display panel adopting IPS mode in which one pixel has the structure shown in Figs. 3 to 5 will be described below.

For an IPS liquid crystal display panel, pixel electrodes and counter electrodes (common electrode) are provided adjacent to the TFT substrate 1. The TFT substrate 1, for example, has a plurality of scan signal lines GL extending in the x direction and provided on the surface of a glass substrate SUB, as shown in Figs. 3 to 5. Provided above the scan signal lines GL are a plurality of video signal lines DL that three-dimensionally intersect the plurality of scan signal lines GL with a first insulating layer PAS1 therebetween and extend in the y direction. A region enclosed by two scan signal lines GL and two video signal lines DL corresponds to one pixel region.

Provided in each pixel region on the surface of the glass substrate SUB is a flat counter electrode CT in each pixel region. The counter electrodes CT arranged in the x direction are electrically coupled to each other via common signal lines CL running in parallel to the scan signal lines GL. Provided on sides opposite to the sides of the scan signal lines GL on which the common signal lines CL are provided are common coupling pads CP, which are electrically coupled to the counter electrodes CT.

Provided on the first insulating layers PAS1 in addition to the video signal lines DL are semiconductor layers, drain electrodes SD1, and source electrodes SD2. Such semiconductor layers, for example, are made of amorphous silicon (a-Si) and include a semiconductor layer that serves as a channel layer SC for a TFT element disposed in each pixel region and a semiconductor layer (not shown) that prevents a short circuit between the scan signal lines GL and the video Signal lines DL in regions in which those lines three-dimensionally intersect one another. For the semiconductor layer serving as a channel SC for a TFT element, both the drain electrode SD1 coupled to the video signal line DL, and the source electrode SD2 are coupled to the semiconductor layer.

Pixel electrodes PX are provided above the surface (layer) on which the video signal lines DL and the like are formed, with a second insulating layer PAS2 between the pixel electrodes PX and the surface. The pixel electrodes PX are independent electrodes provided in each pixel region, and are each electrically coupled to a source electrode SD2 via an opening (through hole) TH1 provided in the second insulating layer PAS2. When the counter electrode CT and pixel electrode PX are stacked with the first and second insulating layers PAS1 and PAS2 therebetween shown in Figs. 3 to 5, the pixel electrode PX is a comb-shaped electrode having slits SL.

Provided on the second insulating layer PAS2 in addition to the pixel electrodes PX is, for example, bridge wiring BR far electrically coupling two counter electrodes CT disposed vertically with the scan signal line GL therebetween. Here the bridge wiring BR is coupled to the common signal line CL and common coupling pad CP disposed with the scan signal line GL therebetween, via through hales TH2, TH3.

Provided on the second insulating layer PAS2 so as to caver the pixel electrode PX and bridge wiring BR is an orientation film 5. Although not shown, the counter substrate 2 is disposed so as to be opposed to the surface of the TFT substrate 1 above which the orientation film 5 is provided.

Fig. 6 is a schematic circuit diagram showing a disposition structure of pixels in the display area of a liquid crystal display panel to which the present invention is to be applied. Fig. 7 is a schematic drawing showing a problem with related art liquid crystal display devices.

The present invention is applied, for example, to a liquid crystal display device including the TFT substrate 1, one pixel region of which has the structure shown in Figs. 3 to 5. In this case, it is assumed that the drain electrodes of the TFT elements disposed in the pixel regions arranged along the direction of extension of the video signal lines DL are coupled to adjacent two video signal lines alternately as shown in Fig. 6. Specifically, for the TFT elements disposed between two adjacent video signal lines DLₙ and DLₙ₊₁, TFT elements coupled to the video signal line DLₙ and TFT elements coupled to the video signal line DLₙ₊₁ are arranged alternately in the direction of extension of the video signal lines. Hereafter, such TFT element disposition will be referred to as "staggered disposition".

It is also assumed that a liquid crystal display panel to which the present invention is to be applied adopts the line-by-line inversion drive method.

Specifically, it is assumed that one video signal line is given video signals having an identical polarity in one frame period and each two adjacent video signal lines are given video signals having mutually inverse polarities so as to be driven inversely. As a result, the pixel electrodes in the pixel regions each show, for example, the polarity relative to the common electrode as shown in Fig. 6.

However, this type of display device has a problem that a stripe (transverse stripe) having light parts and dark parts appears on each of the lines of pixels arranged in the direction of extension of the scan signal lines. Such transverse stripes are more remarkable in the proximity of the region where a scan is completed, for example, in lower regions of the screen when the screen is scanned from top to bottom.

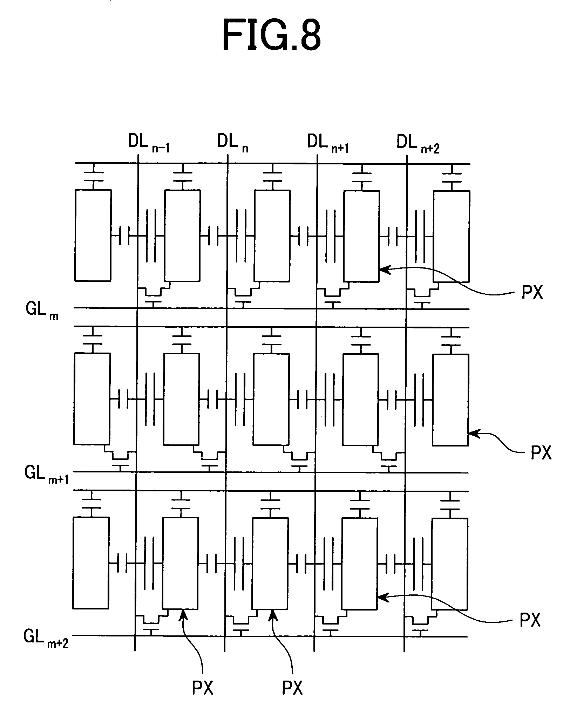

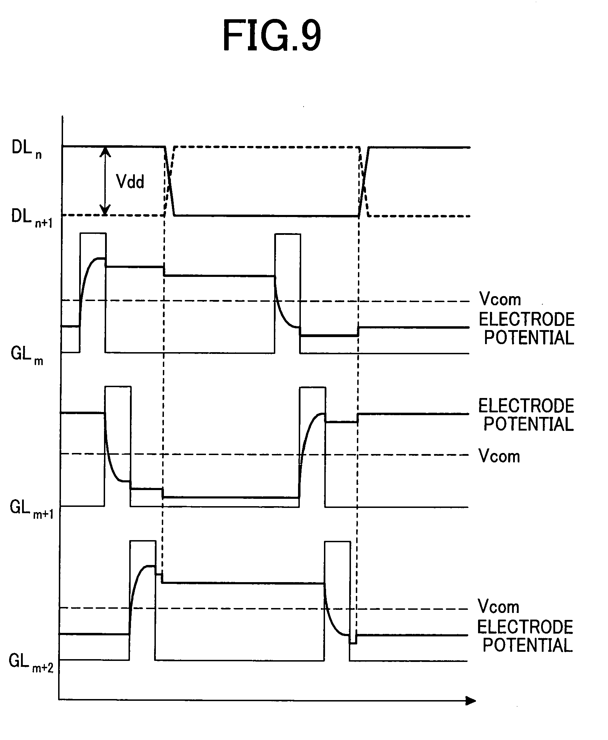

Figs. 8 and 9 are schematic diagrams showing a cause of occurrence of transverse stripes in related art display devices.

In a related art liquid crystal display panel (TFT substrate 1), a pixel electrode is formed such that the respective intervals between the pixel electrode and two adjacent video signal lines are identical so as to make the respective parasitic capacitances generated between the pixel electrode and the video signal lines identical.

However, if the relative positional relations between the pixel electrode and the video signal lines are changed due to mask misalignment or the like in the process of forming the pixel electrode, the respective parasitic capacitances generated between the pixel electrode and video signal lines differ from each other as shown in Fig. 8. For example, the respective potentials of three pixels arranged between the video signal lines DLₙ and DLₙ₊₁ shown in Fig. 8 are changed as shown in Fig. 9.

Specifically, as the polarity of the signals given to the video signal line DLₙ that generates a larger parasitic capacitance with the pixel electrode is changed from positive to negative, the respective potentials of the pixel electrodes are reduced by ΔV. In this case, the luminance of the pixels whose drain electrode of the TFT element is coupled to the video signal line DLₙ becomes less than that set up in the video signals, while the luminance of the pixel whose drain electrode of the TFT element is coupled to the video signal line DLₙ₊₁ becomes more than that set up in the video signals.

On the other hand, as the polarity of the signals given to the video signal line DLₙ that generates a larger parasitic capacitance with the pixel electrode is changed from negative to positive, the respective potentials of the pixel electrodes are increased by ΔV. In this case, the luminance of the pixels whose drain electrode of the TFT element is coupled to the video signal line DLₙ becomes less than that set up in the video signals, while the luminance of the pixel whose drain electrode of the TFT element is coupled to the video signal line DLₙ₊₁ becomes more than that set up in the video signals.

As described above, when there is a discrepancy between the respective parasitic capacitances between the pixel electrode and adjacent two video signal lines, the pixel coupled to the video signal line that generates a larger parasitic capacitance with the pixel becomes darker, while the pixel coupled to the video signal line that generates a smaller parasitic capacitance with the pixel becomes brighter. Such variations in luminance cause transverse stripes.

In the following embodiments of the present invention, methods for reducing transverse strips that appear in a liquid crystal display panel having the structure shown in Figs. 3 to 6 will be described.

### [First Embodiment]

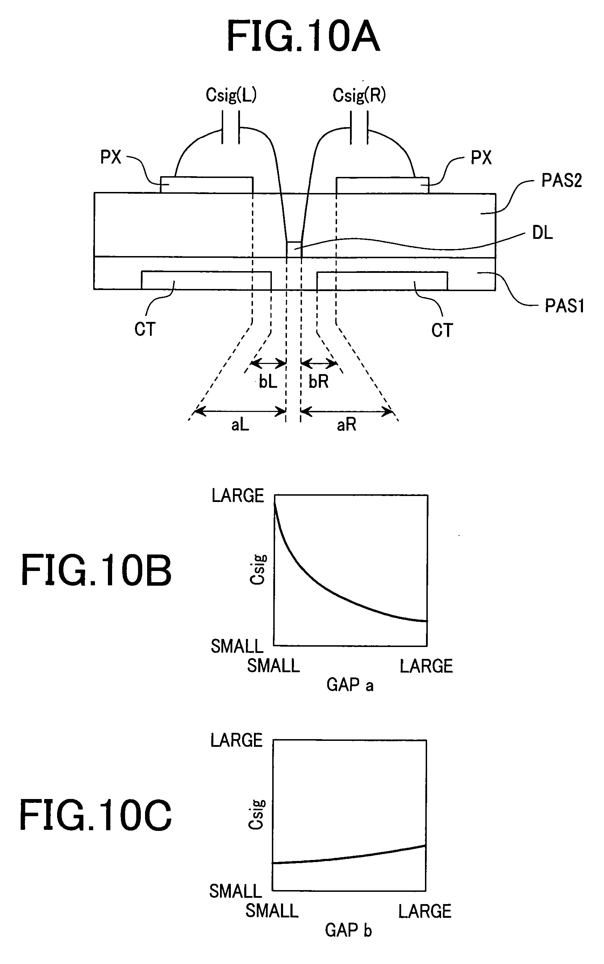

Figs. 10A to 10C are schematic diagrams showing a rough structure of a liquid crystal display device according to a first embodiment of the present invention. Specifically, Fig. 10A is a schematic sectional view showing parameters regarding the parasitic capacitance generated between a pixel electrode and a video signal line, Fig. 10B is a graph showing the relation between the distance between the pixel electrode and video signal line and the parasitic capacitance, and Fig. 10C is a graph showing the relation between the distance between a counter electrode and the video signal line and the parasitic capacitance.

In the first embodiment, description will be made on a method for reducing the parasitic capacitance generated between the pixel electrode and video signal line to reduce transverse strips that appear when a liquid crystal display device in which TFT elements are disposed in a staggered shape is driven using the line-by-line inversion method.

When a liquid crystal display panel adopts the horizontal electric field drive mode and one pixel of the TFT substrate has the structure shown in Figs. 3 to 5, the parasitic capacitances shown in Fig. 10A are generated between the video signal line DL and the pixel electrodes PX disposed on both sides of the video signal line. Since the line of electric force of the video signal line is terminated at the pixel electrode PX and common electrode CT, the parasitic capacitance Csig (R) generated between the video signal line DL and the pixel electrode PX disposed on the right side of the video signal DL is represented by a function between a gap aR between the video signal line DL and the pixel electrode PX disposed on the right side of the video signal DL and a gap bR between the video signal line DL and the common electrode CT disposed on the right side of the video signal DL. Likewise, the parasitic capacitance Csig (L) generated between the video signal line DL and the pixel electrode PX disposed on the left side of the video signal DL is represented by a function between a gap aL between the video signal line DL and the pixel electrode PX disposed on the left side of the video signal DL and a gap bL between the video signal line DL and the common electrode CT disposed on the left side of the video signal DL.

The relation between a gap "a" between the video signal line DL and the pixel electrode PX and the parasitic capacitance Csig is, for example, the relation shown in Fig. 10B. Specifically, as the gap "a" becomes larger, the parasitic capacitance Csig becomes smaller. On the other hand, the relation between a gap "b" between the video signal line DL and the common electrode CT and the parasitic capacitance Csig is, for example, the relation shown in Fig. 10C. Specifically, as the gap "b" becomes smaller, the parasitic capacitance Csig becomes smaller.
In general liquid crystal display devices, the pixel electrode PX and counter electrode CT are designed so as to be as large as possible in order to increase the aperture ratio of each pixel. Therefore, it is very difficult to reduce the gap "b" between the video signal line DL and counter electrode CT to reduce the parasitic capacitance Csig. In other words, in order to reduce the parasitic capacitance Csig, it is preferable to reduce the width of the pixel electrode PX to increase the gap "a" between the video signal line DL and pixel electrode PX.
This allows the parasitic capacitance Csig generated between the video signal line DL and pixel electrode PX to be reduced. Therefore, it is possible to reduce the variation ΔV in the potential of the pixel electrode made at the timing when the polarity of the video signal line is inverted. As a result, transverse stripes that appear in the display area can be reduced.

### [Second Embodiment]

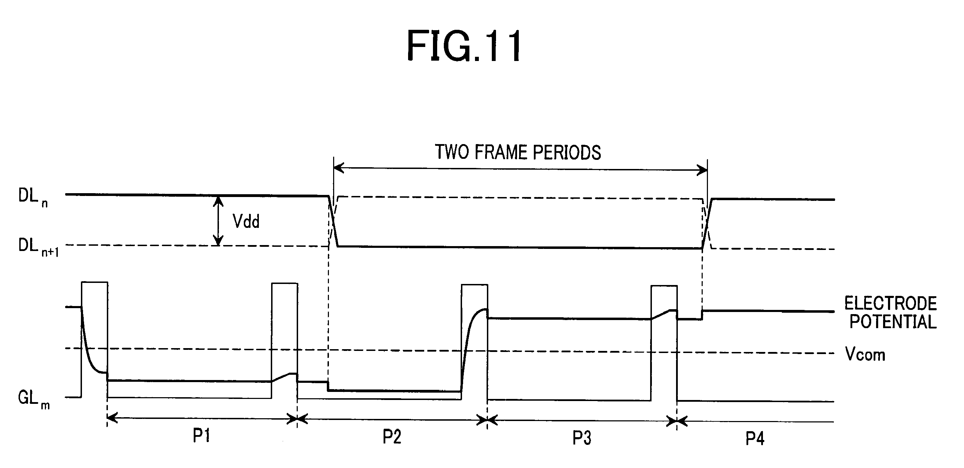

Fig. 11 is a schematic diagram showing a method for driving a liquid crystal display device according to a second embodiment of the present invention.

In the first embodiment, the width of the pixel electrode PX is reduced to increase the gap "a" between the video signal line DL and pixel electrode PX. This allows the parasitic capacitance Csig between the video signal line DL and pixel electrode PX to be reduced, thereby reducing transverse strips. However, reducing the width of the pixel electrode PX will result in a reduction in the aperture ratio of the pixel.

In the second embodiment, a method for changing the drive method to reduce transverse stripes without reducing the aperture ratio of the pixel will be described.

In Fig. 11, P1, P2, P3, and P4 each represent a frame period. The polarity of the video signal line DL is changed every two frame periods. When a certain scan signal line GLm is noted, the polarity of the video signal is not changed in the frame period P1, thereby making no variation ΔV in the pixel potential. However, in the next frame period P2, the polarity of the video signal is changed, so the pixel potential is reduced by ΔV. This increases the difference between the pixel potential and the common potential, thereby increasing luminance. In the next frame period P3, the polarity of the video signal is not changed, so no variation is made in luminance. In other words, a variation in luminance due to change of the polarity of the video signal occurs once every two frame periods. This makes the transverse stripes half that of related art liquid crystal display devices.

### [Third Embodiment]

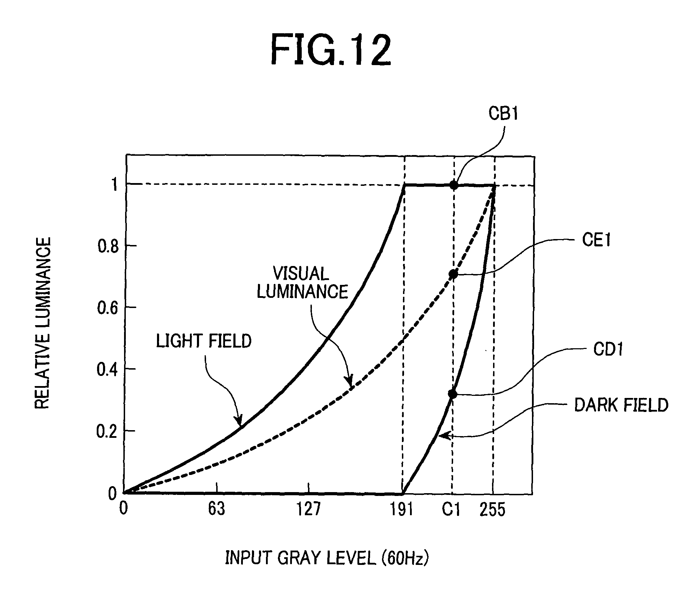

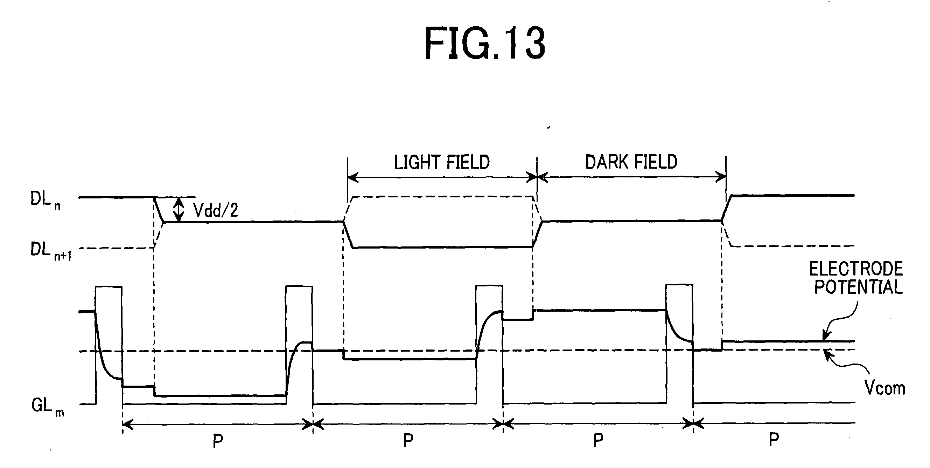

Figs. 12 and 13 are schematic diagrams showing a method for driving a liquid crystal display device according to a third embodiment of the present invention.

Specifically, Fig. 12 is a schematic diagram showing a principle of the method for driving a liquid crystal display device according to the third embodiment of the present invention. Fig. 13 is a schematic diagram showing variations in pixel potential made when the method for driving a liquid crystal display device according to the third embodiment of the present invention is conducted.

In the third embodiment, description will be made on an example in which a drive method different from that according to the second embodiment is adopted as a method for reducing transverse stripes without reducing the aperture ratio of the pixel.

When displaying video pictures or images in a liquid crystal display device, each pixel is generally displayed in identical luminance (gray level) in one frame period. However, in recent years, there have been proposed, for example, method for displaying video pictures or images in different luminance in each of two fields obtained by dividing one frame period.

Among such methods for displaying video pictures or images in different luminance in each of two fields obtained by dividing one frame period is a method for dividing one frame period into a light field and a dark field as shown in Fig. 12. In this method, for example, luminance in the light field and luminance in the dark field are set up based on gray level data on a video signal. If the input gray level of a video signal is, for example, C1, the video picture or image is displayed in luminance CB1 in the light field and in luminance CD1 in the dark field. This causes the video picture or image to appear in luminance CE1 obtained by synthesizing the luminance CB1 in the light field and the luminance CD1 in the dark field for an observer.

If such a drive method is adopted as a method for driving a liquid crystal display device according to the third embodiment of the present invention, the potential of the pixel electrode is changed, for example, as shown in Fig. 13. In the method for driving a liquid crystal display device according to the third embodiment, the voltage width of the video signal line DL becomes Vdd/2 both in the light field display period and in the dark field display period. Therefore, a variation in pixel potential along with the transition of frames or fields becomes half that in the second embodiment in which current alternates every two frames. In other words, while a variation in pixel potential is made along with the transition of frames or fields once for each scan period P in the method for driving a liquid crystal display device according to the third embodiment, the variation becomes half that in related art drive methods, thereby making the transverse stripes half that in related art drive methods.

The third embodiment has another advantage in that a video picture is displayed in low luminance in the dark field display period, thereby making a variation in luminance less identifiable as well as transverse stripes less remarkable.

### [Fourth Embodiment]

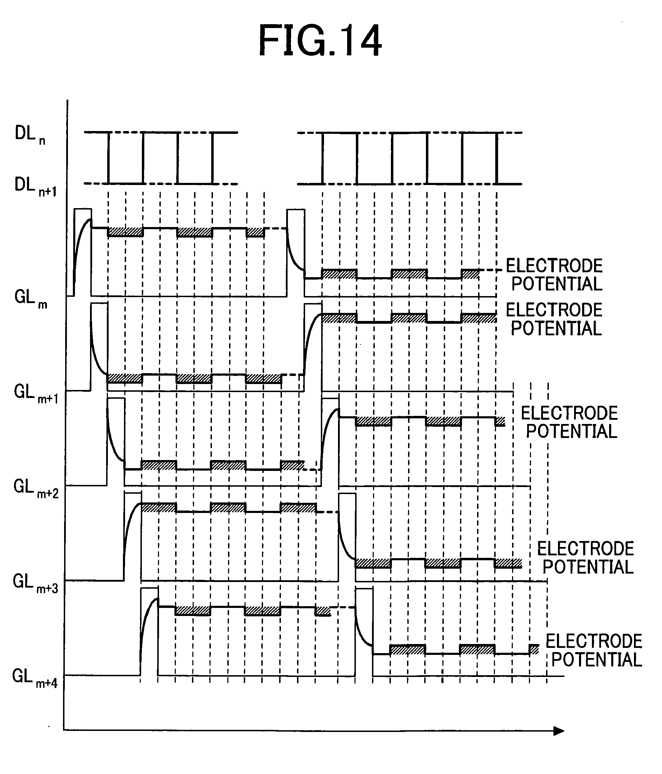

Fig. 14 is a schematic diagram showing a method for driving a liquid crystal display device according to a fourth embodiment of the present invention.

In the fourth embodiment, an example in which a drive method different from the second and third embodiments is adopted as a method for reducing transverse stripes without the aperture ratio of the pixel.

In the fourth embodiment, transverse stripes are reduced by inputting, to the video signal lines DL, "two-line inversion" video signals, that is, video signals such that the polarity is inverted for each two pixels arranged in the direction of extension of the video signal lines.
When two-line inversion is adopted, the potentials of pixel electrodes coupled to five scan signal lines GLₘ, GLₘ₊₁ GLₘ₊₂, GLₘ₊₃, and GLₘ₊₄ arranged between two adjacent video signal lines DLₙ and DLₙ₊₁ are changed, for example, as shown in Fig. 14. At this time, the polarities of video signals given to the video signal lines DLₙ and DLₙ₊₁ are inverted plural times in one frame period. Therefore, the potentials of the pixel electrodes are reduced or increased each time the polarities are inverted. In other words, in the method for driving a liquid crystal display device according to the fourth embodiment, a period in which luminance is decreased due to inversion of the polarity and a period in which luminance is increased due to inversion of the polarity are repeated plural times in one frame period. Therefore, a video picture or image appears in an average level of luminance, allowing the transverse stripes to be reduced.

While the present invention has heretofore been described in detail based on the embodiments, the invention is not limited to these embodiments. Various modifications can be made to these embodiments without departing from the scope and spirit of the invention.

For example, in these embodiments, the liquid crystal display device adopting horizontal electric field drive mode in which one pixel has the structure shown in Figs. 3 to 5 is used; however, the present invention is applicable to liquid crystal display devices that have other pixel structures.

## Claims

1. TFT display device including a display panel, comprising:
a plurality of scan signal lines (GL),
a plurality of video signal lines (DL) three-dimensionally intersecting the plurality of scan signal lines (GL) with an insulating layer (PAS1) therebetween, and
thin film transistor elements and pixel electrodes (PX) disposed in pixel regions enclosed by each adjacent two of the scan signal lines (GL) and each adjacent two of the video signal lines (DL),
wherein the direction of disposition of the thin film transistor elements toward the video signal lines (DL) is inverted each time the video signal lines (DL) cut across the scan signal lines (GL) in the direction of extension of the video signal lines (DL),
each of the video signal lines (DL) is given a signal whose polarity is identical in one frame period and is inverted for each frame period,
each adjacent two of the video signal lines (DL) are given signals having mutually inverse polarities, and the display area (DA) is set up as a group of the pixel regions in the display panel.

2. TFT display device including a display panel, comprising:
a plurality of scan signal lines (GL),
a plurality of video signal lines (DL) three-dimensionally intersecting the plurality of scan signal lines (GL) with an insulating layer (PAS1) therebetween, and
thin film transistor elements and pixel electrodes (PX) disposed in pixel regions enclosed by each adjacent two of the scan signal lines (GL) and each adjacent two of the video signal lines (DL),
wherein the direction of disposition of the thin film transistor elements toward the video signal lines (DL) is inverted each time the video signal lines (DL) cut across the scan signal lines (GL) in the direction of extension of the video signal lines (DL),
each of the video signal lines (DL) is given a signal whose polarity is identical in two consecutive frame periods and is inverted for each two consecutive frame periods,
each adjacent two of the video signal lines (DL) are given signals having mutually inverse polarities, and the display area is set up as a group of the pixel regions in the display panel.

3. TFT display device according to claim 1 or 2,
wherein the video signal lines (DL) are given video signals each having a higher gray level than the video signals in a first field period obtained by dividing one frame period into two field periods and are given video signals each having a lower gray level than the video signals in a second field period obtained by dividing the one frame period into two field periods, and
the scan signal lines (GL) are given scan signals in synchronization with the first and second field periods.

4. TFT display device according to any of claims 1 to 3,
wherein the video signal given to each of the video signal lines (DL) in one frame period is such that the polarity of a potential relative to the common potential is inverted for each two pixels arranged in the direction of extension of each video signal.

5. TFT display device including a display panel, comprising:
a plurality of scan signal lines (GL),
a plurality of video signal lines (DL) three-dimensionally intersecting the plurality of scan signal lines (GL) with an insulating layer (PAS1) therebetween, and
flat counter electrodes (CT), pixel electrodes (PX), and
thin film transistor elements formed in pixel regions enclosed by each adjacent two of the scan signal lines (GL) and each adjacent two of the video signal lines (DL), the pixel electrodes (PX) being formed above the counter electrodes (CT) with an insulating layer therebetween and each having a slit (SL),
the thin film transistor elements being coupled to the pixel electrodes (PX),
wherein the direction of disposition of the thin film transistor elements toward the video signal lines (DL) is inverted each time the video signal lines (DL) cut across the scan signal lines (GL) in the direction of extension of the video signal lines (DL),
each of the video signal lines (DL) is given a signal whose polarity is identical in one frame period and is inverted for each frame period,
each adjacent two of the video signal lines (DL) are given signals having mutually inverse polarities, and the display area (DA) is set up as a group of the pixel regions in the display panel.

6. TFT display device including a display panel, comprising:
a plurality of scan signal lines (GL),
a plurality of video signal lines (DL) three-dimensionally intersecting the plurality of scan signal lines (GL) with an insulating layer (PAS1) therebetween, and
flat counter electrodes (CT), pixel electrodes (PX), and
thin film transistor elements formed in pixel regions enclosed by each adjacent two of the scan signal lines (GL) and each adjacent two of the video signal lines (DL), the pixel electrodes (PX) being formed above the counter electrodes (CT) with an insulating layer therebetween and each having a slit (SL), the thin film transistor elements being coupled to the pixel electrodes (PX),
wherein the direction of disposition of the thin film transistor elements toward the video signal lines (DL) is inverted each time the video signal lines (DL) cut across the scan signal lines (GL) in the direction of extension of the video signal lines (DL),
each of the video signal lines (DL) is given a signal whose polarity is identical in two consecutive frame periods and is inverted for each two consecutive frame periods,
each adjacent two of the video signal lines (DL) are given signals having mutually inverse polarities, and the display area (DA) is set up as a group of the pixel regions in the display panel.

7. TFT display device according to claim 4, 5 or 6
wherein the video signal lines (DL) are given video signals each having a higher gray level than the video signals in a first field period obtained by dividing one frame period into two field periods and are given video signals each having a lower gray level than the video signals in a second field period obtained by dividing the one frame period into two field periods, and
the scan signal lines are given scan signals in synchronization with the first and second field periods.

8. TFT display device according to any of claims 5 to 7,
wherein the video signal given to each of the video signal lines (DL) in one frame period is such that the polarity of the potential relative to the common potential is inverted for each two pixels arranged in the direction of extension of each video signal.

9. TFT display device according to any of claims 4 to 8,
wherein the distances between the pixel electrodes (PX) and the video signal lines (DL) are longer than the distances between the counter electrodes (CT) and the video signal lines (DL).

10. Method for driving a TFT display device including a display panel, comprising:
a plurality of scan signal lines (GL),
a plurality of video signal lines (DL) three-dimensionally intersecting the plurality of scan signal lines (GL) with an insulating layer(PAS1) therebetween, and
thin film transistor elements and pixel electrodes (PX) disposed in pixel regions enclosed by each adjacent two of the scan signal lines (GL) and each adjacent two of the video signal lines (DL),
wherein the direction of disposition of the thin film transistor elements toward the video signal lines (DL) is inverted each time the video signal lines (DL) cut across the scan signal lines (GL) in the direction of extension of the video signal lines (DL),
each of the video signal lines (DL) is given a signal whose polarity is identical in one frame period and is inverted for each frame period,
each adjacent two of the video signal lines (DL) are given signals having mutually inverse polarities, and
the display area (DA) is set up as a group of the pixel regions in the display panel.

11. Method for driving a TFT display device including a display panel, comprising:
a plurality of scan signal lines (GL),
a plurality of video signal lines (DL) three-dimensionally intersecting the plurality of scan signal lines (GL) with an insulating layer (PAS1) therebetween, and
thin film transistor elements and pixel electrodes (PX) disposed in pixel regions enclosed by each adjacent two of the scan signal lines (GL) and each adjacent two of the video signal lines (DL),
wherein the direction of disposition of the thin film transistor elements toward the video signal lines (DL) is inverted each time the video signal lines (DL) cut across the scan signal lines (GL) in the direction of extension of the video signal lines (DL),
each of the video signal lines (DL) is given a signal whose polarity is identical in two consecutive frame periods and is inverted for each two consecutive frame periods,
each adjacent two of the video signal lines (DL) are given signals having mutually inverse polarities, and
the display area is set up as a group of the pixel regions in the display panel.

12. Method according to claim 10 or 11,
wherein the video signal lines (DL) are given video signals each having a higher gray level than the video signals in a first field period obtained by dividing one frame period into two field periods and are given video signals each having a lower gray level than the video signals in a second field period obtained by dividing the one frame period into two field periods, and
the scan signal lines (GL) are given scan signals in synchronization with the first and second field periods.

13. Method according to any of claims 10 to 12, wherein the video signal given to each of the video signal lines (DL) in one frame period is such that the polarity of a potential relative to the common potential is inverted for each two pixels arranged in the direction of extension of each video signal.

14. Method according to any of claims 10 to 13,
wherein the video signal given to each of the video signal lines (DL) in one frame period is such that the polarity of the potential relative to the common potential is inverted for each two pixels arranged in the direction of extension of each video signal.
